# EUROPÄISCHE PATENTSCHRIFT

(11) **EP 0 584 898 B1**
(45) Veröffentlichungstag und Bekanntmachung des Hinweises auf die Patenterteilung: **05.03.1997**
(21) Anmeldenummer: 93250216.4
(22) Anmeldetag: 26.07.1993
(51) Int. Cl.: B60J 5/04

(54) **Aufprallträger für eine Kraftfahrzeugtür**
Impact beam for a door of a motor vehicle
Poutre de choc pour une porte de véhicule à moteur

(30) Priorität: 21.08.1992 DE 9211327 U
(43) Veröffentlichungstag der Anmeldung: 02.03.1994
(73) Patentinhaber: MANNESMANN Aktiengesellschaft, 40213 Düsseldorf (DE)
(72) Erfinder: Siekmeyer, Josef, Dipl.-Ing., D-40885 Ratingen (DE); Hoffmann, Ulrich, Dipl.-Ing., D-47058 Duisburg (DE)
(74) Vertreter: Kalkoff, Heinz-Dieter, Dipl.-Ing.

(56) Entgegenhaltungen:
- EP-A- 0 425 059
- EP-A- 0 467 829
- DE-A- 4 133 144
- DE-C- 3 728 778
- US-A- 4 708 390
- US-A- 4 866 883

## Beschreibung

Die Erfindung betrifft einen Aufprallträger für die Verstärkung einer Tür eines Kraftfahrzeuges gemäß dem Gattungsbegriff des Anspruches 1.

Ein derartiger Aufprallträger ist aus der DE-A-4 133 144 bekannt.

Aufprallträger dienen zur Sicherung des Fahrgastraumes eines Personenkraftwagens, indem sie die gesamte Türkonstruktion versteifen und damit Verformungsarbeit aufnehmen können. Da der zur Verfügung stehende Einbauraum begrenzt ist, werden zur Erzielung des erforderlichen Trägheitsmomentes relativ dickwandige Biegeträger, insbesondere Rohre eingesetzt (US-A-4,866,883; US-A-4,708,390). Im Falle von sehr schmalen Einbauräumen werden statt eines Biegeträgers zwei übereinanderliegende Biegeträger angeordnet. Alternativ dazu ist es bekannt, zur Gewichtseinsparung für dickwandige Biegeträger Profile einzusetzen, die einen mittleren Bereich aufweisen, dessen im Querschnitt liegende Höhe immer größer ist als die Tiefe und die so in der Kraftfahrzeugtür angeordnet sind, daß die Tiefe parallel zur Stoßrichtung liegt (DE-C-37 28 778; DE-A-41 33 144). Diese bereits bekannten Profile sind hinsichtlich ihres Querschnittprofiles, des Gewichtes und des Trägheitsmomentes nicht optimal gestaltet, wobei die Kastenprofile einen relativ geringen Knickwiderstand aufweisen. Aufgabe der Erfindung ist es, einen verbesserten Aufprallträger anzugeben, der hinsichtlich seiner Einbautiefe, des Gewichtes, des Trägheitsmomentes und des Knickwiderstandes optimal gestaltet ist. Eine weitergehende Aufgabe besteht darin, den Aufprallträger in einfacher Weise an der Kraftfahrzeugtür zu befestigen.

Die Hauptaufgabe wird mit den im kennzeichnenden Teil angegebenen Merkmalen des Anspruches 1 gelöst. Vorteilhafte Weiterbildungen sind Bestandteil von Unteransprüchen.

Gegenüber dem schon bekannten Kastenprofil (DE-A-41 33 144, Fig. 1) weist das erfindungsgemäße Profil einen ovalähnlichen Querschnitt auf. Dieser besteht aus zwei im Abstand voneinander parallelliegender gerader Seiten, die an ihren Enden durch einen mindestens einen Radius aufweisenden konvexen Abschnitt miteinander verbunden sind, wobei der Radius dieses Abschnittes immer größer ist als der halbe Abstand der beiden geraden Seiten. Dieses Profil hat den Vorteil, daß es zum einen eine geringe Einbautiefe aufweist und durch die geraden Seiten in einfacher Weise an der Kraftfahrzeugtür befestigt werden kann. Außerdem ist im Vergleich zu einem Kastenprofil der Knickwiderstand größer. Im Vergleich zu einem elliptischen (DE-A-41 33 144, Fig. 7) und einem flachovalen (DE-A-41 33 144, Fig. 8) Profil ist das Trägheitsmoment des erfindungsgemäßen Profiles größer, so daß es in dieser Hinsicht optimiert ist.

Besonders günstige Verhältnisse ergeben sich dann, wenn der Radius des konvexen Abschnittes mindestens 1,5mal vorzugsweise 10mal größer ist wie der halbe Abstand zwischen den beiden geraden Seiten. Aus fertigungstechnischen Gründen wird der Übergang vom konvexen Abschnitt in die gerade Seite abgerundet, wobei der Abrundungsradius kleiner ist als der halbe Abstand der beiden Seiten und im Bereich von 1 bis 5 mm liegt.

Das zuvor erläuterte Profil wird in der üblichen Weise mittels Schrauben oder durch Schweißen in der Kraftfahrzeugtür befestigt. Für eine zusätzliche Befestigung des Profils an der Kraftfahrzeugtür wird weiterbildend vorgeschlagen, die der Fahrzeugtür zugewandte gerade Seite des Profils mit mindestens einer Sicke zu versehen. Diese Sicke dient als Klebstoffvorrat, wenn das Profil unmittelbar auf der Innenseite der Außenhaut der Kraftfahrzeugtür zusätzlich aufgeklebt wird. Dazu ist es erforderlich, daß der in Längsrichtung liegende Achsverlauf des Profils der üblicherweise leicht konvexen Kontur der Kraftfahrzeugtür angepaßt ist. Die zusätzliche Befestigung des Profils auf der Innenseite der Außenhaut hat den Vorteil, daß die Außenhaut durch das aufgeklebte Profil in der gewünschten Weise versteift wird. Bisher war es üblich, örtlich auf die Innenseite der Außenhaut dünnwandige Blechprofile zur Versteifung aufzukleben. Dieses kann mit dem vorgeschlagenen Profil, das eine Sicke aufweist, entfallen. Das vorgeschlagene Profil hat, ob mit oder ohne Sicke weiterhin den Vorteil, daß die geraden Seiten des Profils auch zur Befestigung oder Aufnahme anderer Türelemente genutzt werden können.

Im Sinne einer weiteren Gewichtsreduzierung ist es bekannt (US-A-4,708,390), das Profil an den Enden abzuschrägen und das Ende der Schräge lappenartig auszubilden (DE-A-41 33 144). Damit das Befestigungselement, sei es Schraube, Mutter oder Bolzen, genügend Material für die Anbringung hat, kann der lappenartige Bereich durch Falten oder Anstauchen verstärkt werden. Dazu wird das Ende der Schräge beispielsweise induktiv erwärmt und entsprechend angeformt.

In der Zeichnung wird anhand mehrerer Ausführungsbeispiele das erfindungsgemäße Profil näher erläutert.

Es zeigen:
- Figur 1: einen Schnitt eines erfindungsgemäßen Profils eines Aufprallträgers entlang der Linie A-A in Fig. 2
- Figur 2: eine Ansicht in Richtung X in Fig. 1
- Figur 3: ein weiteres Ausführungsbeispiel ähnlich Fig. 1, jedoch mit einer Sicke
- Figur 4: wie Fig. 3 in Verbindung mit der Außenhaut einer Kraftfahrzeugtür

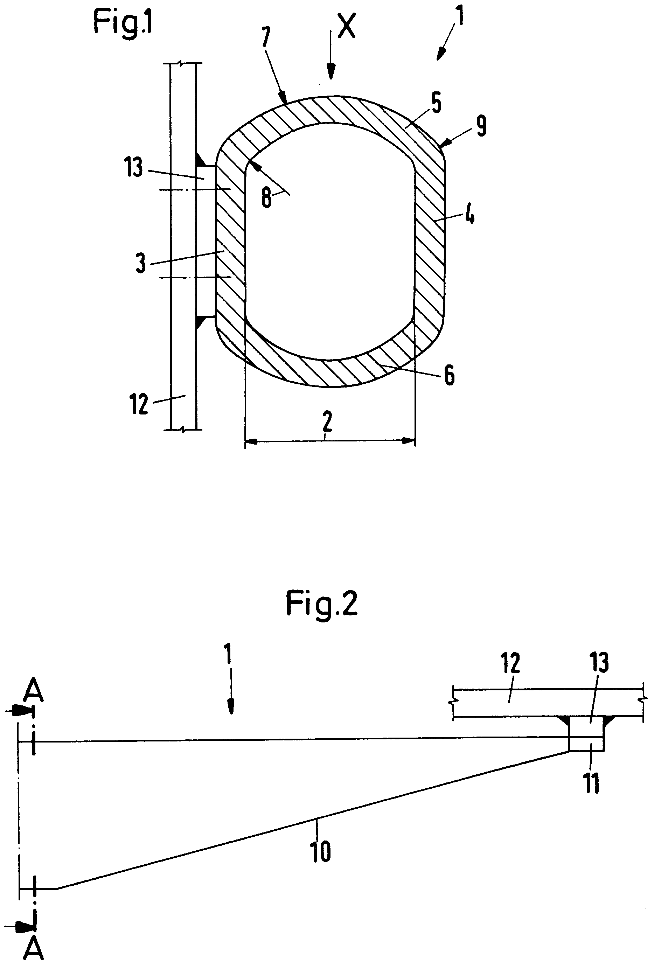

In Figur 1 ist in einem Schnitt und in Figur 2 in einer Draufsicht eine erste Ausführungsform des erfindungsgemäßen Profiles eines Aufprallträgers 1 dargestellt. Es weist einen ovalähnlichen Querschnitt auf mit zwei im Abstand voneinander parallelliegenden Seiten 3,4. Diese geraden Seiten 3,4 werden an ihren Enden verbunden mit einem konvex gekrümmten Abschnitt 5,6, dessen Radius 7 immer größer ist als der halbe Abstand 2 zwischen den beiden Seiten 3,4. In diesem konkreten Beispiel ist der Radius etwa 1,7mal so groß wie der halbe Abstand 2. Der konvexe Abschnitt 5,6 geht abgerundet in die beiden geraden Seiten 3,4 über, wobei die Abrundungsradien 8,9 geringer sind als der halbe Abstand 2 der beiden Seiten 3,4. Diese Abrundungsradien 8,9 liegen in der Größenordnung zwischen 1 bis 5 mm.

Zur Gewichtseinsparung ist der Aufprallträger 1 am Ende abgeschrägt und das Ende der Schräge 10 als Lappen 11 ausgebildet. Zur Befestigung des Aufprallträgers 1 an einem Türelement 12 wird beispielsweise ein Halteblech 13 angeschweißt und dieses mit Gewindebohrungen versehen. Man kann dann in einfacher Weise eine Schraube durch eine im Lappen 11 angeordnete Bohrung stecken und den Aufprallträger 1 am Türelement 12 festziehen. Alternativ ist es auch möglich, einen einen Gewindeabschnitt aufweisenden Stehbolzen anzuschweißen und den Aufprallträger 1 mittels einer Mutter festzuziehen. Auch ein direktes Befestigungsverfahren des Aufprallträgers 1 beispielsweise mittels einer Punktschweißung ist vorstellbar und bereitet keine Schwierigkeiten.

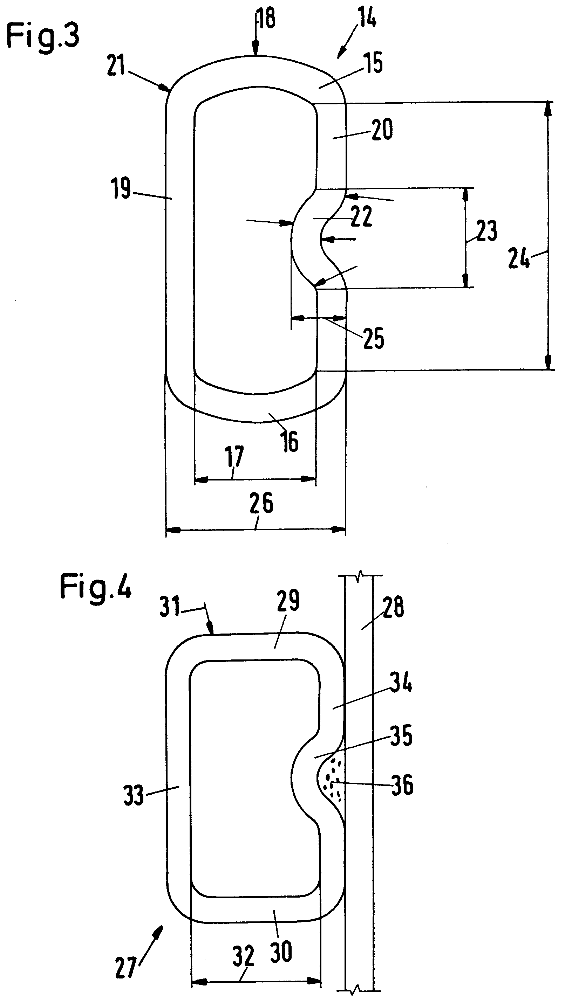

Figur 3 zeigt einen Querschnitt einer weiteren Ausführungsform eines erfindungsgemäßen Aufprallträgers 14. Diese Ausführungsform 14 unterscheidet sich von der in Figur 1 dargestellten Ausführungsform dadurch, daß der konvexe Abschnitt 15,16 einen noch größeren Radius 18 aufweist. Er ist in diesem Beispiel etwa 2,3mal größer als der halbe Abstand 17 zwischen den beiden geraden Seiten 19,20. Der Übergang zwischen konvexem Abschnitt 15,16 und geraden Seiten 19,20 ist ebenfalls abgerundet 21. Als Besonderheit weist dieses Profil 14 auf der der Kraftfahrzeugtür zugewandten geraden Seite 20 eine Sicke 22 auf. Die Bedeutung dieser Sicke 22 wird in Figur 4 näher erläutert. In diesem Beispiel ist nur eine Sicke 22 angeformt, es könnten aber ebenso auch zwei im Abstand voneinander liegende Sicken sein. Die Längserstreckung 23 dieser Sicke 22 beträgt weniger als die Hälfte der Längserstreckung 24 der geraden Seite 20 und die Tiefe 25 weniger als die Hälfte der halben Tiefe 26 des Profils 14. Auch die Sicke 22 geht abgerundet in die gerade Seite 20 über. Die verschiedenen Abrundungsradien sind mit Pfeilen gekennzeichnet.

Figur 4 zeigt ein ähnliches Profil 27 wie Fig. 3, jedoch in Verbindung mit der Außenhaut 28 einer nicht näher dargestellten Kraftfahrzeugtür. Der konvexe Abschnitt 29,30 ist in diesem Ausführungsbeispiel schon sehr flach und der Radius 31 ist mehr als 10mal größer als der halbe Abstand 32 der beiden geraden Seiten 32,34. Bei dieser Darstellung ist der Aufprallträger 27 zusätzlich auf der Innenseite der Außenhaut 28 einer Kraftfahrzeugtür befestigt und zwar durch Kleben. Die Vertiefung der Sicke 35 bildet zusammen mit der Innenseite der Außenhaut 28 eine Kammer 36, die als Reservoir für den aufgebrachten Klebstoff dient. Bei dieser Anordnung ist es erforderlich, daß der in Längsrichtung liegende Achsverlauf des Aufprallträgers 27 mit dem Konturverlauf der Außenhaut 28 der Kraftfahrzeugtür übereinstimmt. Da üblicherweise die Außenhaut 28 leicht konvex gekrümmt ist, muß der Aufprallträger 27 ebenfalls entsprechend gebogen sein.

## Patentansprüche

1. Aufprallträger für die Verstärkung einer Tür eines Kraftfahrzeuges, insbesondere eines Personenkraftwagens, der als Hohlprofilteil in der Fahrzeugtür festlegbar ist und der mindestens im mittleren Bereich einen Abschnitt aufweist, dessen im Querschnitt liegende Höhe immer größer ist als die Tiefe und der so in der Kraftfahrzeugtür angeordnet ist, daß die Tiefe parallele zur Stoßrichtung liegt, wobei der ovalähnliche Querschnitt des Hohlprofilteils zwei im Abstand voneinander parallelliegende gerade Seiten (3, 4; 19, 20, 33, 34) aufweist, die an ihren Enden durch einen mindestens einen Radius (7, 18, 31) aufweisenden konvexen gekrümmten Abschnitt (5, 6; 15, 16; 29, 30) miteinander verbunden sind,
dadurch gekennzeichnet, daß der konvexe Abschnitt (5, 6; 15, 16; 29, 30) abgerundet in die beiden geraden Seiten (3, 4; 19, 20; 33, 34) übergeht, und die Abrundungsradien (8, 9, 21) kleiner sind als der halbe Abstand (2, 17, 32) der beiden Seiten (3, 4; 19, 20; 33, 34). und daß der Radius (7, 18, 31) dieses Abschnittes, der durchgehend konvex ist, immer größer ist als der halbe Abstand (2, 17, 32) der beiden geraden Seiten (3, 4; 19, 20; 33, 34).

2. Aufprallträger nach Anspruch 1,
**dadurch gekennzeichnet,**
daß der Radius (7,8,31) des konvexen Abschnittes (5,6;15,16;29,30) mindestens 1,5mal so groß ist wie der halbe Abstand (2,17,32) der beiden geraden Seiten (3,4;19,20;33,34).

3. Aufprallträger nach Anspruch 1 und 2,
**dadurch gekennzeichnet,**
daß der Radius (31) des konvexen Abschnittes (29,30) mehr als zehnmal so groß ist wie der halbe Abstand (32) der beiden geraden Seiten (33,34).

4. Aufprallträger nach den Ansprüchen 1 bis 3,
**dadurch gekennzeichnet,**
daß die der Fahrzeugtür zugewandte gerade Seite (20,34) des Profils (14,27) mindestens eine Sicke (22,35) aufweist, die abgerundet in die gerade Seite (20,34) übergeht.

5. Aufprallträger nach Anspruch 4,
**dadurch gekennzeichnet,**
daß das Profil zwei im Abstand voneinander ausgebildete Sicken aufweist.

6. Aufprallträger nach Anspruch 4,
**dadurch gekennzeichnet,**
daß die im Querschnitt liegende Längserstreckung (23) der Sicke (22) weniger als die Hälfte der Längserstreckung (24) der geraden Seite (20) und die im Querschnitt liegende Tiefe (25) weniger als die Hälfte der halben Tiefe (26) des Profils (14) beträgt.

7. Aufprallträger nach einem der vorhergehenden Ansprüche,
**dadurch gekennzeichnet,**
daß der in Längsrichtung liegende Achsverlauf des Aufprallträgers (1,14,27) dem Konturverlauf der Kraftfahrzeugtür angepaßt ist und der Aufprallträger (1,14,27) zusätzlich an der Innenseite der Türaußenhaut (28) befestigt ist.

8. Aufprallträger nach den Ansprüchen 4 bis 7,
**dadurch gekennzeichnet,**
daß der Aufprallträger (27) zusätzlich aufgeklebt wird, wobei die zwischen der Vertiefung der Sicke (35) und der Innenseite der Außenhaut (28) sich bildende Kammer (36) als Klebstoffreservoir dient.

9. Aufprallträger nach einem der vorhergehenden Ansprüche,
**dadurch gekennzeichnet,**
daß mindestens ein Ende des Profils (1,14,27) abgeschrägt und das Ende der Schräge (10) lappenartig (11) ausgebildet ist.

## Claims

1. Impact beam for reinforcing a door of a motor vehicle, particularly a car, which can be fixed as a hollow section in the vehicle door and which at least in the central area has a portion, whose cross-sectional height is always greater than the depth and which is so positioned in the vehicle door that the depth is parallel to the impact direction, the oval cross-section of the hollow section having two spaced, parallel, straight sides (3, 4; 19, 20; 33, 34), which are interconnected at their ends by a convexly curved portion (5, 6; 15, 16; 29, 30) having at least one radius (7, 18, 31), characterized in that the convex portion (5, 6; 15, 16; 29, 30) passes in rounded manner into the two straight sides (3, 4; 19, 20; 33, 34) and the roundness radii (8, 9, 21) are smaller than half the spacing (2, 17, 32) of the two sides (3, 4; 19, 20; 33, 34) and that the radius (7, 18, 31) of said portion, which is convex throughout, is always larger than half the spacing (2, 17, 32) of the two straight sides (3, 4, 19, 20; 33, 34).

2. Impact beam according to claim 1, characterized in that the radius (7, 8, 31) of the convex portion (5, 6; 15, 16; 29, 30) is at least 1.5 times as large as half the spacing (2, 71, 32) of the two straight sides (3, 4; 19, 20; 33, 34).

3. Impact beam according to claim 1 and 2, characterized in that the radius (31) of the convex portion (29, 30) is more than 10 times as large as half the spacing (32) of the two straight sides (33, 34).

4. Impact beam according to claims 1 to 3, characterized in that the straight side (20, 34) of the section (14, 27) facing the vehicle door has at least one corrugation (22, 35) passing in rounded form into the straight side (20, 34).

5. Impact beam according to claim 4, characterized in that the section has two spaced corrugations.

6. Impact beam according to claim 4, characterized in that the cross-sectionally positioned longitudinal extension (23) of the corrugation (22) is less than half the longitudinal extension (24) of the straight side (20) and the cross-sectional depth (25) is less than half the half-depth (26) of the section (14).

7. Impact beam according to one of the preceding claims, characterized in that the longitudinally directed dial path of the impact beam (1, 14, 27) is adapted to the contour path of the vehicle door and the impact beam (1, 14, 27) is additionally feed to the inside of the door outer skin (28).

8. Impact beam according to claims 4 to 7, characterized in that the impact beam (27) is additionally bonded, the chamber (36) formed between the depression of the corrugations (35) and the inside of the outer skin (28) serving as an adhesive reservoir.

9. Impact beam according to one of the preceding claims, characterized in that at least one end of the section (1, 14, 27) is bevelled and that the end of the bevel (10) has a lug-like (11) construction.

## Revendications

1. Poutre de choc pour le renforcment d'une porte de véhicule à moteur, en particulier d'une voiture de tourisme, qui doit pouvoir être bloquêe comme pièce profilée creuse dans la porte du véhicule et qui présente au moins dans la zone du milieu une portion dont la hauteur qui se situe dans la section est plus grande que la profondeur et qui est placée dans la porte du véhicule de telle manière que la profondeur se situe parallèlement au sens du choc, la section semblable à un ovale de la pièce profilée creuse présentant deux côtés droits (3, 4; 19, 20; 33, 34), situés parallèlement à un écart l'un de l'autre, qui sont reliés l'un à l'autre à leurs extrémités par une portion courbée convexe (5, 6; 15, 16; 29, 30) qui présente au moins un rayon (7, 18, 31), caractérisée en ce que la section convexe (5, 6; 15, 16; 29, 30) se poursuit en étant arrondie dans les deux côtés droits (3, 4; 19, 20; 33, 34) et les rayons d'arrondissement (8, 9, 21) sont plus petits que la moitié de l'écart (2, 17, 32) des deux côtés (3, 4; 19, 20; 33, 34) et que le rayon (7, 18, 31) de cette section, qui est convexe en continu, est toujours plus grand que la moité de l'écart (2, 17, 32) des deux côtés droits (3, 4; 19, 20; 33, 34).

2. Poutre de choc selon la revendication 1, caractérisée en ce que le rayon (7, 8, 31) de la portion convexe (5, 6; 15, 16; 29, 30) est au moins une fois et demie la moitié de l'cart (2, 17, 32) des deux côtés droits (3, 4; 19, 20, 33, 34).

3. Poutre de choc selon la revendication 1 et 2, caractérisée en ce que le rayon (31) de la portion convexe (29, 30) est plus de dix fois la moitié de l'écart (32) des deux côtés droits (33, 34).

4. Poutre de choc selon les revendications 1 á 3, caractérisée en ce que le côté droit (20, 34) du profilé (14, 27) tourné vers la porte du véhicule présente au moins une moulure (22, 35) qui se poursuit en étant arrondie dans le côté droit (20, 34).

5. Poutre de choc selon la revendication 4, caractérisée en ce que le profilé présente deux moulures formées à un écart l'une de l'autre.

6. Poutre de choc selon la revendication 4, caractérisée en ce que l'extension en longueur (23) de la moulure (22) qui se situe dans la section est inférieure à la moitié de l'extension en longueur (24) du côte droit (20) et la profondeur (25) qui se situe dans la section est inférieure à la moitié de la moité de la profondeur (26) du profilé (14).

7. Poutre de choc selon l'une des revendications précédentes, caractérisée en ce que le sens de l'axe de la poutre de choc (1, 14, 27), qui se situe dans le sens longitudinal est adapté aux contours de la porte du véhicule et la poutre de choc (1, 14, 27) est fixée en plus au côté intérieur de l'enveloppe extérieure de la porte (28).

8. Poutre de choc selons les recendications 4 à 7, caractérisée en ce que la poutre de choc (27) est collée en plus, le compartiment (36) qui se forme entre l'evidement de la moulure (35) et le côté intérieur de l'enveloppe extérieure (28) servant de réservoir de colle.

9. Poutre de choc selon l'une des revendications précédentes, caractérisée en ce qu'au moins une extrémité du profilé (1, 14, 27) est biseautée et l'extrémité du biseau (10) est configurée à la manière d'une patte (11).
